# DEMANDE DE BREVET EUROPEEN

(11) **EP 1 044 839 A1**
(43) Date de publication de la demande: **18.10.2000**
(21) Numéro de dépôt: 00400689.6
(22) Date de dépôt: 13.03.2000
(51) Int. Cl.: B60J 10/00, D04B 21/20

(54) **Armature à fil métallique pour profilé en élastomère ou en plastomère et son procédé de fabrication**

(30) Priorité: 13.04.1999 FR 9904593
(71) Demandeur: BTR SEALING SYSTEMS FRANCE, 92000 Nanterre (FR)
(72) Inventeur: Dron, Bernard, 92800 Puteaux (FR)
(74) Mandataire: Jolly, Jean-Pierre

(57) **Abrégé**

L'invention concerne une armature du type à fil métallique pour profilé en élastomère ou en plastomère, cette armature comprenant un fil métallique continu (1), recourbé de manière à présenter un profil ondulé régulier, les parties contiguës (1a) du fil (1) disposées entre les sommets des ondulations étant réunies par des tresses (2) de fibres textiles ou en une matière synthétique entrelacées avec le fil métallique (1), de manière à enserrer celui-ci, et disposées transversalement.

Selon l'invention, au moins les parties (3) du fil métallique (1) correspondant aux sommets des ondulations présentent une forme aplatie résultant d'un laminage du fil.

## Description

La présente invention concerne une armature à fil métallique pour profilé en élastomère ou en plastomère. L'invention concerne également un procédé de fabrication de cette armature.

Des profilés en une matière souple, déformable élastiquement, sont utilisés notamment dans l'industrie automobile comme organes d'étanchéité de portes, de vitres ou de coffre, et ils comportent habituellement une partie à section en U, destinée à coiffer et pincer un bord saillant de la carrosserie du véhicule pour en être rendue solidaire. La plupart du temps, cette partie à section en U comporte une armature rigide, de profil analogue en U, généralement métallique, gainée au moins partiellement de l'élastomère ou du plastomère constituant le profilé. Cette armature rigidifie le profilé et lui permet de pincer fermement l'élément de carrosserie qu'il est destiné à équiper.

Deux principaux types d'armatures sont couramment utilisées dans ce but dans la technique, à savoir :
- des armatures découpées dans un feuillard métallique plan, qui sont ensuite conformées en U ;
- des armatures comprenant au moins un fil métallique continu, recourbé de manière à présenter un profil ondulé régulier, les parties contiguës du fil disposées entre les sommets des ondulations étant réunies par des tresses de fibres textiles ou en une matière synthétique entrelacées avec le fil métallique, de manière à enserrer celui-ci, et disposées transversalement, ces armatures pouvant elles aussi être conformées en U.

Il existe de très nombreuses variantes d'armatures à fil métallique de ce deuxième type (voir, par exemple, EP 0 096 533 A, EP 0 155 811 A, EP 0 159 136 A, EP 0 175 818 A, ou encore EP 0 384 613 A) et c'est à ce genre d'armatures, dites aussi "armatures tricotées", que s'intéresse la présente invention.

Elle a plus particulièrement pour but d'augmenter, notamment, la résistance à l'ouverture des profilés à section transversale en U réalisés à partir de telles armatures et elle propose, dans ce but, d'accroître la surface de contact entre le fil métallique et l'élastomère ou le plastomère qui le gaine, en déformant ce fil localement par laminage.

L'invention a par conséquent pour premier objet une armature à fil métallique du type défini ci-dessus, caractérisée en ce que ce qu'au moins les parties du fil métallique correspondant aux sommets de ses ondulations présentent une forme aplatie résultant d'un laminage local du fil.

Avantageusement, la portion centrale des brins du fil réunissant les sommets des ondulations est également aplatie localement.

Bien entendu, l'invention englobe aussi bien les armatures de forme générale plane de ce type que les armatures à section en U obtenues par conformage des précédentes.

L'invention a également pour objet un procédé de fabrication d'une telle armature, caractérisé en ce que, avant de réunir entre elles les parties contiguës du fil métallique à l'aide de tresses de fibres textiles ou en une matière synthétique, ou après cette opération, on aplatit localement par laminage au moins les parties du fil métallique correspondant au sommet des ondulations de ce fil.

Avantageusement, on peut aplatir également par laminage les portions centrales de ce fil réunissant les sommets des ondulations. Les portions déformées de ces brins sont de préférence soumises à un laminage moins important que les sommets des ondulations du fil.

L'invention a enfin pour objet les profilés en élastomère ou plastomère dont une partie au moins, notamment une partie à section transversale en U, comporte une armature conforme à l'invention, noyée au moins partiellement dans l'élastomère ou le plastomère.

D'autres caractéristiques et avantages de l'invention apparaîtront dans la description détaillée qui va suivre de deux formes de mise en oeuvre de celle-ci. Dans cette description, on se réfèrera aux dessins schématiques annexés, sur lesquels :
La figure 1 est une vue en plan d'une première armature conforme à l'invention ;
Les figures 2 et 3 sont des coupes, respectivement, suivant les lignes II-II et III-III de la figure 1 ;
La figure 4 est une vue partielle en perspective d'un profilé à section transversale en U, en élastomère ou en plastomère, équipé de l'armature de la figure 1 conformée en U ;
La figure 5 est une vue analogue à la figure 1 d'une autre armature conforme à l'invention.

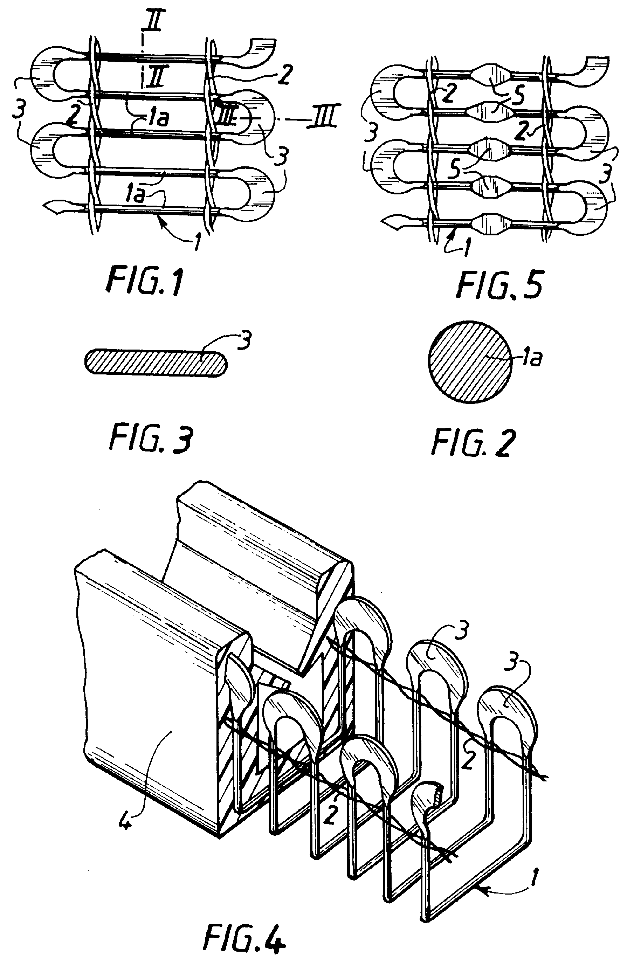

L'armature plane représentée sur la figure 1 est l'une des plus simples de celles dites à fil métallique.

Elle comprend un fil métallique continu 1, ici à section sensiblement circulaire, recourbé de manière à former des ondulations régulières, et deux tresses parallèles 2 de fibres textiles ou synthétiques réunissant transversalement les parties sensiblement rectilignes la du fil 1 disposées entre les sommets des ondulations. Ces fibres, ici au nombre de deux pour chaque tresse, enserrent les parties la et peuvent éventuellement être nouées autour de celles-ci ou en être rendues solidaires par collage.

Conformément à l'invention, les sommets 3 des ondulations du fil 1 sont aplaties par laminage, de manière à accroître la surface de contact avec l'élastomère ou le plastomère du profilé que ces armatures sont destinées à équiper, et à réduire les risques de déformation du profilé dans le sens longitudinal, sans utilisation de moyens additionnels tels que des fibres de verre disposées longitudinalement dans le profilé, comme il a été proposé dans la technique antérieure. Le laminage du sommet des ondulations est effectué avant ou après la mise en place des tresses 2 sur le fil 1.

Un tel profilé 4, à section transversale en U, est représenté sur la figure 4. Il est destiné à coiffer en le pinçant un bord saillant d'une carrosserie d'automobile et il est naturellement essentiel que les branches du U ne risquent pas de s'écarter l'une de l'autre en provoquant une ouverture accidentelle du profilé, par exemple lors du montage de celui-ci.

Dans ce but, l'armature plane de la figure 1 est conformée en U et le plastomère ou l'élastomère constituant le profilé 4 est extrudé sur cette armature, dont les parties aplaties 3 et les tresses 2 sont logées ici dans les branches du U.

La surface de contact entre les parties 3 et l'élastomère ou le plastomère est beaucoup plus importante que si le fil 2 n'avait pas été laminé, ce qui accroît notablement la résistance à l'ouverture du profilé.

Avantageusement, les parties en plastomère ou en élastomère du profilé dans lesquelles sont noyées les parties 3 aplaties peuvent présenter une légère surépaisseur.

Le fil métallique pourra avoir par exemple un diamètre d'environ 0,9 mm, tandis que les parties 3, soumises à un fort laminage, ont une largeur variant entre 0,9 et 3 mm suivant la portion considérée de ces parties.

Comme on le voit sur la figure 5, où les organes déjà décrits sont désignés par les mêmes chiffres de référence, les portions centrales 5 des parties rectilignes du fil métallique réunissant les sommets des ondulations (parties 1a de la figure 1) peuvent avantageusement être elles aussi aplaties, mais sous l'effet d'un laminage plus faible que celui auquel sont soumises les parties 3. Comme pour ces parties 3, les portions centrales 5 peuvent être laminées avant ou après l'entrelacement des tresses 2 et du fil métallique 1.

Ces parties aplaties 5, destinées à prendre place dans la partie centrale de la base du U du profilé 4 à section en U, ont pour effet d'atténuer considérablement et de régulariser l'aspect externe dit "en côtes de cheval" de tels profilés, qui leur confère un aspect peu agréable au regard. On peut aussi, avantageusement, laisser déborder les portions laminées de la base du U dans les parties incurvées du profilé, pour accroître la raideur transversale de celui-ci.

L'invention s'applique à toutes les armatures à fil métallique, à section circulaire ou non, et apporte donc un moyen particulièrement simple à mettre en oeuvre pour accroître la résistance à l'ouverture des profilés à section en U en élastomère ou en plastomère extrudé sur une telle armature.

## Revendications

1. Armature du type à fil métallique pour profilé en élastomère ou en plastomère, cette armature comprenant un fil métallique continu (1), recourbé de manière à présenter un profil ondulé régulier, les parties contiguës (1a) du fil (1) disposées entre les sommets des ondulations étant réunies par des tresses (2) de fibres textiles ou en une matière synthétique entrelacées avec le fil métallique (1), de manière à enserrer celui-ci, et disposées transversalement, cette armature étant caractérisée en ce qu'au moins les parties (3) du fil métallique (1) correspondant aux sommets des ondulations présentent une forme aplatie résultant d'un laminage du fil.

2. Armature selon la revendication 1, caractérisé en ce que la portion centrale (5) des parties (1a) du fil métallique (1) disposées entre les sommets des ondulations présente également une forme aplatie résultant d'un laminage du fil, de préférence moins accentué que le laminage auquel ont été soumises les parties (3) correspondant au sommet des ondulations du fil.

3. Armature selon l'une des revendications 1 et 2, caractérisée en ce qu'elle présente une section transversale en U.

4. Procédé de fabrication d'une armature selon l'une des revendications 1 à 3, caractérisé en ce que, avant de réunir entre elles les parties contiguës (1a) du fil métallique (1) à l'aide de tresses de fibres textiles ou en une matière synthétique, ou après cette opération, on aplatit localement par laminage au moins les parties (3) du fil métallique correspondant au sommet des ondulations de ce fil.

5. Procédé selon la revendication 4, caractérisé en ce que, avant de réunir entre elles les parties (1a) du fil métallique (1) disposées entre les sommets des ondulations, à l'aide de tresses (2) de fibres textiles ou en un matériau synthétique, ou après cette opération, on aplatit par laminage la portion centrale (5) de ces parties (1a).

6. Procédé selon la revendication 5, caractérisé en ce que le laminage auquel sont soumises les portions centrales (5) des parties (1a) du fil métallique (1) est moins important que celui auquel sont soumis les sommets des ondulations de ce fil.

7. Profilé (4) en élastomère ou plastomère dont une partie au moins, notamment une partie à section transversale en U, comporte une armature selon l'une des revendications 1 à 3, noyée au moins partiellement dans l'élastomère ou le plastomère.
